# EUROPÄISCHE PATENTSCHRIFT

(11) **EP 0 617 503 B1**
(45) Veröffentlichungstag und Bekanntmachung des Hinweises auf die Patenterteilung: **07.02.1996**
(21) Anmeldenummer: 94103614.7
(22) Anmeldetag: 09.03.1994
(51) Int. Cl.: H02M 7/5387

(54) **Verfahren und Vorrichtung zur Arbeitspunktregelung eines Reihenschwingkreis-Wechselrichters**
Method and device for controlling the set point of an inverter loaded in serie with a resonant circuit
Dispositif et méthode de commande du point de fonctionnement d'un onduleur charge en série avec un circuit résonnant

(30) Priorität: 22.03.1993 DE 4309163
(43) Veröffentlichungstag der Anmeldung: 28.09.1994
(73) Patentinhaber: SIEMENS AKTIENGESELLSCHAFT, D-80333 München (DE)
(72) Erfinder: Doht, Hans-Christian, Dipl.-Ing., D-91054 Erlangen (DE); Birk, Gunther, D-91052 Erlangen (DE)

(56) Entgegenhaltungen:
- US-A- 4 471 196
- US-A- 4 719 558
- US-A- 4 866 592

## Beschreibung

Die Erfindung bezieht sich auf ein Verfahren und eine Vorrichtung zur Arbeitspunktregelung eines Reihenschwingkreis-Wechselrichters.

Das Prinzip der induktiven Erwärmung findet seine Anwendung häufig zur Leistungsübertragung auf bewegtes Heizgut. Die Wirkungsweise ist einfach. Ein magnetisches Wechselfeld erzeugt in elektrisch leitfähigem Material Wirbelströme. Die elektrischen Verluste im Heizgut bewirken dessen Erhitzung. Zur Erzeugung des magnetischen Wechselfeldes ist ein sogenannter Induktor notwendig. Er wird von einer Wechselquelle gespeist. Die übertragene Wirkleistung ist neben den genauen Lastverhältnissen (Induktor mit Heizgut) von der Erregerfrequenz abhängig. Die Wahl des Frequenzbereichs richtet sich neben Aspekten der Realisierbarkeit nach der speziellen Anwendung. Aufgrund des Stromverdrängungseffektes erzeugen hohe Frequenzen eine Erwärmung der Heizgutoberfläche. Niedere Frequenzen haben eine große Eindringtiefe und erhitzen damit das Volumen des Materials. Ein Anwendungsbeispiel ist die Beheizung von rotierenden Walzen im Glättwerk von Papierherstellungsmaschinen.

Als Spannungsversorgungen dienen Umrichter. Röhrenwechselrichter werden häufig im hochfrequenten Bereich verwandt. Der Wirkungsgrad eines derartigen Aufbaus ist wegen der Röhrenverluste gering (η ≈ 70%). Die Alternative dazu bilden Hochleistungshalbleiter. Sie zeigen bei geeigneter Ansteuerung geringe Schalt- und Durchlaßverluste. Um eine Überbeanspruchung der Schaltelemente auszuschließen, müssen bestimmte Betriebsbedingungen eingehalten werden. Die Hauptaufgabe der Steuerungs- und Regelelektronik ist zum einen die Gewährleistung eines bestimmten Betriebsbereiches und zum anderen die Regelung eines oder mehrerer Betriebsgrößen.

Zur Entlastung der Schaltelemente werden oftmals schwingfähige Systeme von dem Umrichter gespeist. Bei der Ansteuerung eines derartigen Schwingkreiswechselrichters mit Frequenzen im Bereich des Resonanzpunktes treten im Schaltzeitpunkt nur kleine Ströme bzw. Spannungen auf. Damit reduzieren sich die Schaltverluste erheblich. Ein Verlassen des definierten Arbeitsbereiches führt zu einer wesentlichen Zunahme derselbigen. Bei einigen Topologien bedeutet das die Zerstörung der Schalter.

Im Aufsatz "Senderöhre, Thyristor oder Mosfet im Frequenzwandler für das induktive Randschichthärten und ihr Einfluß auf die Anwendungstechnik", abgedruckt in der DE-Zeitschrift "Elektrowärme International", 47 (1989), B4 - August, Seiten B192 bis B201, werden verschiedene Bauformen von Frequenzwandlern hinsichtlich ihrer Vor- und Nachteile als Energiequellen für das induktive Randschichthärten untersucht. Dabei werden die elektrischen und elektronischen Phänomene auch in Verbindung mit der Verfahrens- und Anwendungstechnik behandelt. Der Wirkungsgrad der Frequenzumformung ist bei der Verwendung von Mosfets und Thyristoren am höchsten. Werte von größer 90% sind ohne Schwierigkeiten zu erreichen. Ein Induktorversagen übersteht ein konventioneller Röhrengenerator in der Regel ohne Folgeschäden. Nahezu ähnlich problemlos reagiert ein Parallelschwingkreis-Umrichter mit symmetrischen Thyristoren auf einen solchen Havariefall. Bei Umrichtern mit Transistoren können bei einem Induktorversagen Ausfälle von Halbleiter-Baulelementen auftreten.

Im Aufsatz "Resonanzumrichter im Mittelfrequenzbereich", abgedruckt in der DE-Zeitschrift "etz", Band 110 (1990), Heft 18, Seiten 948 bis 953, sind unter anderem Reihenschwingkreis-Wechselrichter und Parallelschwingkreis-Wechselrichter vorgestellt. Beim Reihenschwingkreis-Wechselrichter ergibt sich als anregende Spannung u, auch Erregerspannung genannt, über dem Schwingkreis ein rechteckförmiger Verlauf. Die Frequenz der anregenden Rechtecksschwingung kann oberhalb oder unterhalb der Resonanzfrequenz des Schwingkreises liegen. Wird der Schwingkreis-Wechselrichter mit nicht abschaltbaren Leistungshalbleitern betrieben, so muß eine Arbeitsfrequenz unterhalb der Resonanzfrequenz gewählt werden. Stehen abschaltbare Leistungshalbleiter zur Verfügung, so kann der Reihenschwingkreis auch oberhalb der Resonanzfrequenz angeregt werden. Ein in diesem Bereich liegender Betriebspunkt ist vorteilhaft, da das Abschaltverhalten der Dioden nun keine Bedeutung mehr erlangt. In Folge der verminderten Schaltverluste kann die Arbeitsfrequenz bis in den Bereich einiger 100 kHz gesteigert werden. Der Strom im Leistungshalbleiter weist dann die Gestalt einer Halbschwingung auf, die beim Einschalten mit einem negativen Augenblickswert beginnt und beim Ausschalten mit einem positiven Wert endet.

Verschiebungen des Resonanzpunktes durch Parameteränderungen im Schwingkreis müssen durch die Regelung erkannt und in geeigneter Weise behandelt werden. Solche Schwankungen treten in großem Maße bei der induktiven Erwärmung auf. Sie resultieren zum einen aus der Temperaturabhängigkeit des ohmschen Widerstandes im Material, und zum anderen aus den Veränderungen der magnetischen Eigenschaften. So variiert die relative Permeabilität ferromagnetischer Stoffe beim Überschreiten der Curietemperatur um Zehnerfaktoren. Der Werkstoff verhält sich dann diamagnetisch. Diese Änderung wirkt sich direkt auf den Blindwiderstand des Heizgutes und damit auf die Impedanz an den Induktorklemmen aus. Bei einigen Anwendungen ist auch mit Kurzschlüssen des Induktors zu rechnen (Kurzschlüsse treten zusätzlich zu den Parameterschwankungen auf).

Die Regelung eines Reihenschwingkreis-Wechselrichters soll im stationären Betrieb die Betriebsgröße (Leistung) des Induktors auf die Sollwerte ausregeln. Dabei können unterschiedliche Größen zur Bestimmung der Leistung herangezogen werden, wie beispielsweise Einspeiseleistung, Schwingkreisleistung, Temperatur des Werkstücks bzw. die Spaltdicke zwischen den Walzen einer Papierherstellungsmaschine. Die maximal erreichbare Leistung ist dabei von besonderem Interesse. Des weiteren müssen Störungen des stationären Betriebes (transiente Vorgänge und Parameterschwankungen) beherrscht werden.

Bei der Steuerung und Regelung eines Umrichters mit einem Zwei-Speicher-System als Lastkreis gibt es leicht berechenbare Zusammenhänge zwischen Anregung und den Zustandsgrößen des Systems. In der Literatur:
R. Oruganti, F.C. Lee "Resonant Power Processors: Part II - Methods of Control", IEEE IAS Annual Meeting, Proceedings 1984, Seiten 868 - 878
R. Oruganti, F.C. Lee "Resonant Power Processors: Part I - State Plane Analysis", IEEE IAS Annual Meeting, Proceedings 1984, Seiten 860 - 867
S.W.H. de Haan, H. Huisman "Novel Operation and Control Modes for Series-Resonant Converters", IEEE Transactions On Industrial Elektronics, Vol. 32, No. 2, Mai 1985, Seiten 150 - 157
sind mögliche Regelverfahren bekannt, wie zum Beispiel Transistorleitdauer-Regelung, Diodenleitdauer-Regelung, Kondensatorspannungs-Regelung und Frequenzregelung.

Aufgrund der komplexen Zusammenhänge und des hohen Aufwandes an Meß- und Regelelektronik wird eine Arbeitspunktregelung häufig über eine Frequenzsteuerung oder -regelung vorgenommen, bei der als Eingangsgröße oftmals nur eine relevante Zustandsgröße Verwendung findet. Ändert sich ein Parameter des Schwingkreises während des Betriebs, verschieben sich die Arbeitsbereiche ebenfalls. Mit einer Frequenzsteuerung, die bestimmte Schwingkreisparameter voraussetzt, besteht die Gefahr des Verlassens des festgelegten Arbeitspunktes. Der Punkt der maximalen Leistung kann dann gegebenenfalls nicht mehr erreicht werden.

Im Aufsatz "Solid State RF Generators for Induction Heating Applications", abgedruckt in "IEEE IAS", 1982, Conference Record 1982, Seiten 939 - 944, ist ein Halbleiter-Wechselrichter zur Induktionserwärmung vorgestellt. Der Wechselrichter enthält vier Power-Mosfets, die eine H-Brücke bilden, an deren Ausgangsklemmen ein Zwei-Speicher-System als Lastkreis angeschlossen ist. Außerdem ist eine Regeleinrichtung vorgestellt, womit der Laststrom geregelt wird, wobei zwei variable Begrenzungen vorgesehen sind. Die eine variable Begrenzung verwendet die Kondensatorspannung, die mit einem Grenzwert verglichen wird, wobei die Spannungsabweichung über einen Integrator und einen Grenzwertglied der Stromregeldifferenz zugeführt wird. Die andere variable Begrenzung verwendet den Phasenwinkel-Istwert zwischen Laststrom und Erregerspannung des Wechselrichters, der mit einem Phasenwinkel-Sollwert verglichen wird. Eine Phasenwinkelabweichung wird ebenfalls über ein Grenzwertglied der Stromregeldifferenz zugeführt. Der Phasenwinkel-Istwert wird mittels eines EXOR-Gatters mit nachgeschaltetem Glättungsglied aus einem gemessenen Laststrom und den Steuersignalen in Verbindung mit einer Verzögerung bestimmt. Mittels dieser Regelung ist zwar sichergestellt, daß der Arbeitsbereich nie verlassen wird, jedoch der Aufwand für diese Regelung sehr groß ist und eine Leistungsregelung auf einen konstanten Wert bei Parameterschwankung mit dieser Regelung nicht möglich ist.

Der Erfindung liegt nun die Aufgabe zugrunde, ein Verfahren und eine Vorrichung zur Arbeitspunktregelung eines Reihenschwingkreis-Wechselrichters anzugeben, so daß unabhängig von Parameterschwankungen der Schwingkreiselemente der vorgeschriebene Arbeitsbereich für den Schwingkreiswechselrichter erkannt und stabil gehalten werden kann.

Diese Aufgabe wird erfindungsgemäß durch die Merkmale des Anspruchs 1 gelöst.

Aufgrund der Erkenntnis, daß die Phasenverschiebung zwischen einer Zustandsgröße des Lastkreises des Reihenschwingkreis-Wechselrichters und der Erregerspannung als Funktion von der Schaltfrequenz des Wechselrichters ein eindeutiges Signal zur Detektion des Leistungsmaximums liefert, ist es möglich, in Abhängigkeit der Regelgröße "Phasenwinkel" Verschiebungen des Resonanzpunktes fehlerfrei zu erkennen. Diese Tatsache eröffnet die Möglichkeit, den Betriebsbereich (Arbeitspunkt des Wechselrichters) auch bei starken Laständerungen, beispielsweise bei Überschreiten der Curietemperatur, einzuhalten. Eine Sollwert-Vorgabe bei der Phasenregelung einer Zustandsgröße wird durch die Wirkleistungsabgabe des Reihenschwingkreis-Wechselrichters bestimmt. Welche Zustandsgröße des Lastkreises zur Phasenregelung verwendet wird, hängt von deren Phasengang ab. Da der Phasengang einer Zustandsgröße bei einem Zwei-Speicher-System anders verlaufen kann als bei einem Drei-Speicher-System, ist die Wahl der Zustandsgröße von der Anzahl der Speicher abhängig. Auch ander ausgedrückt ist der Phasengang einer Zustandsgröße von der Anzahl der Speicher abhängig, sowie von der Art der Speicher (Kapazität, Induktivität) und deren Anordnung in einem Netzwerk. Außerdem ist die Zuordnung des Leistungsmaximums zu einem Phasenwinkel einer Zustandsgröße abhängig von der Güte des Schwingkreises.

Mit sinkender Güte verschiebt sich das Leistungsmaximum zu größeren Phasenwinkelwerten.

Somit erhält man ein Verfahren, mit dem unabhängig von Parameterschwankungen der Schwingkreiselemente der vorgeschriebene Arbeitsbereich für den Schwingkreisbereich erkannt wird und stabil eingehalten werden kann.

Zur Realisierung des erfindungsgemäßen Verfahrens benötigt man nur einen Vergleicher mit einem nachgeschalteten Regler, wegen der Verwendung auch Arbeitspunktregler genannt, einen Phasendetektor und einen Frequenzdetektor. Der Minus-Eingang des Vergleichers ist mit dem Ausgang des Phasendetektors, und ein erster Frequenzeingang des Reglers ist mit dem Ausgang des Frequenzdetektors verbunden, wobei an beiden Detektoren die Zustandgröße des Lastkreises angeschlossen ist, deren Phasengang monoton fallend ist. An einem zweiten Eingang des Phasendetektors steht außerdem die Erregerspannung des Wechselrichters an. Dem Plus-Eingang des Vergleichers wird ein Phasenwinkel-Sollwert zugeführt, wobei auf einem zweiten Frequenzeingang des Reglers sein Ausgangssignal rückgekoppelt ist.

Durch die Erkenntnis, daß der Phasenwinkel einer Zustandsgröße des Lastkreises als Regelgröße zur Arbeitspunktregelung eines Reihenschwingkreis-Wechselrichters verwendet werden kann, erhält man einen besonders einfachen Arbeitspunktregler, der insbesondere einem Leistungsregler des Reihenschwingkreis-Wechselrichters untergeordnet ist.

Zur weiteren Erläuterung wird auf die Zeichnung Bezug genommen, in der ein Ausführungsbeispiel der erfindungsgemäßen Vorrichtung schematisch veranschaulicht ist.
- Figur 1: zeigt das Prinzipschaltbild einer HF-Speisequelle eines Induktors, die
- Figur 2: zeigt einen Teil dieses Prinzipschaltbildes nach Figur 1 näher, in den
- Figuren 3 und 4: sind der Strom und die Spannung eines Induktors im unterresonanten Betrieb jeweils in einem Diagramm über der Zeit t dargestellt und in den
- Figuren 5 und 6: sind der Strom und die Spannung eines Induktors im überresonanten Betrieb jeweils in einem Diagramm über der Zeit t dargestellt, die
- Figur 7: zeigt in einem Diagramm über der Frequenz f den Phasengang des Laststromes und der Kondensatorspannung in Bezug zur Leistungskurve, in
- Figur 8: ist ein Blockschaltbild einer erfindungsgemäß Vorrichtung zur Durchführung des Verfahrens zur Arbeitspunktregelung dargestellt, wobei die
- Figur 9: den Aufbau des Arbeitspunktreglers als Blockschaltbild wiedergibt, die
- Figur 10: zeigt in einem Diagramm über der Zeit t die Erregerspannung und die Kondensatorspannung, wobei in der
- Figur 11: in einem Diagramm über der Zeit t einerseits ein Gatterausgangssignals des Phasendetektors und andererseits der ermittelte Phasenwinkel-Istwert dargestellt sind, und die
- Figur 12: zeigt in einem Diagramm über der Kreisfrequenz ω den Phasengang einer Zustandsgröße und die Wirkleistung bei veränderten Parametern des Schwingkreises.

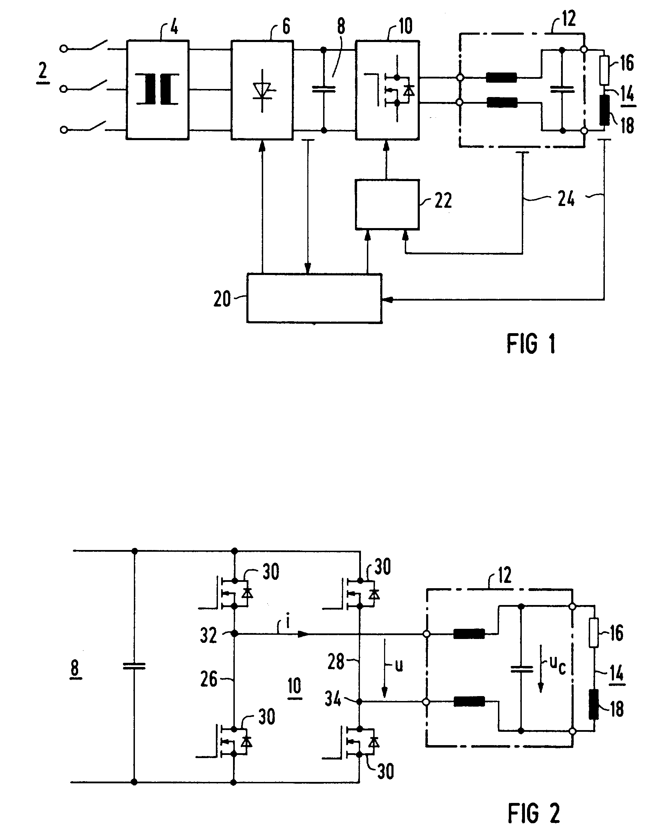

Wie aus der Figur 1 ersichtlich, wird aus einem Drehstromnetz 2 über einen Transformator 4 und einen steuerbaren Gleichrichter 6 eine Gleichspannung erzeugt, die in der Höhe veränderbar ist. Diese wird im Zwischenkreis 8 geglättet und gepuffert.

Die Gleichspannung wird anschließend durch einen Hochfrequenztransistor-Umrichter 10 in eine pulsförmige Wechselspannung verwandelt und über eine Transformationsschaltung 12 einem Induktor 14 zugeführt, der im Ersatzschaltbild als Widerstand 16 und Induktivität 18 dargestellt ist. Der Lastkreis, bestehend aus der Transformationsschaltung 12 und dem Induktor 14, bildet einen Reihenschwingkreis mit drei Energiespeichern. Der Lastkreis kann auch wie in den zitierten Dokumenten aufgebaut sein. Der hier verwendete Lastkreis ist in der Deutschen Patentanmeldung mit dem Aktenzeichen P 4 133 981.9 ausführlich dargestellt.

Für den gesteuerten Gleichrichter 6 und den Umrichter 10 sind Regeleinrichtungen 20 und 22 vorgesehen, denen Istwerte 24 aus dem durch Induktor 14 und Transformationsschaltung 12 gebildeten Reihenschwingkreis zugeführt werden. Neben diesen elektrischen Istwerten können auch noch andere Meßgrößen, wie zum Beispiel die Temperatur des Werkstücks usw. für die Regelung herangezogen werden.

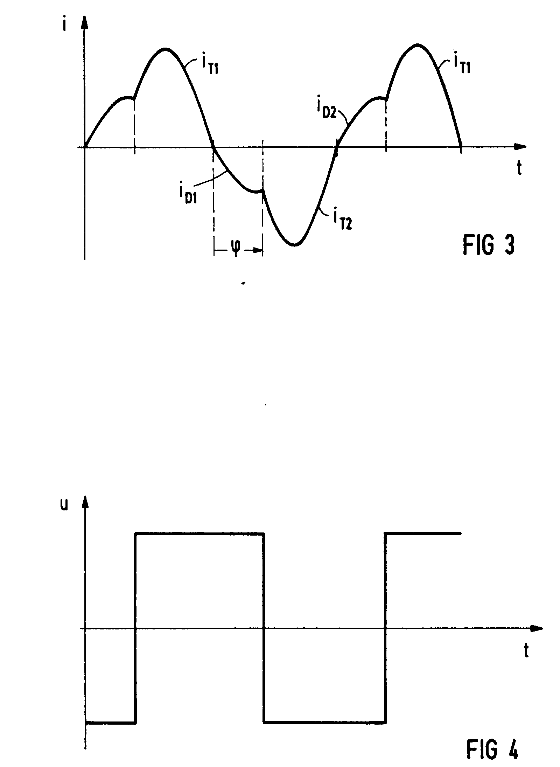

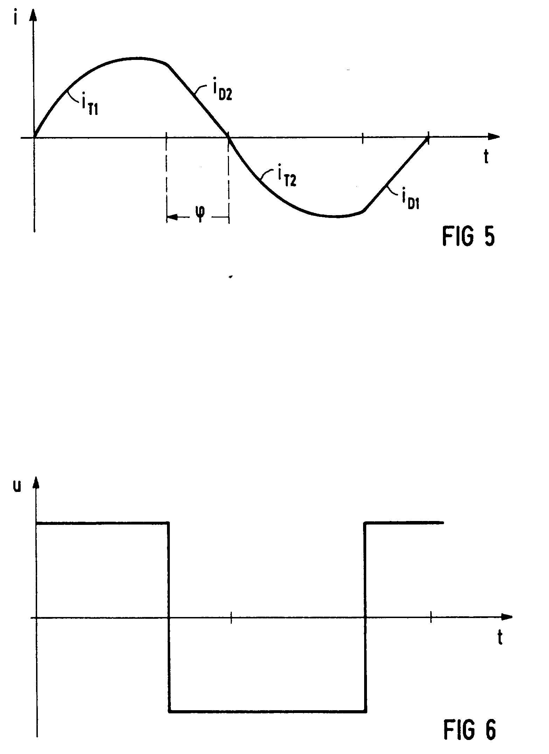

Wie der Figur 2 zu entnehmen ist, besteht der Umrichter 10 aus zwei Brückenzweigen 26 und 28, die jeweils in jeder Brückenhälfte einen Leistungs-MOSFET (Metalloxidschicht-Fel-deffekttransistor) 30, insbesondere einen selbstsperrenden MOSFET aufweisen. Diese Leistungs-MOSFETs 30 haben jeweils eine interne Diode, auch Inversdiode genannt. An den Ausgangsklemmen 32 und 34 des Hochfrequenz-Umrichters 10 ist die Transformationsschaltung 12 mit ausgangsseitigem Induktor 14 angeschlossen. Der Umrichterausgangsstrom i, auch Laststrom genannt, und die Umrichterausgangsspannung u, auch Erregerspannung genannt, sind jeweils in einem Diagramm über der Zeit t für den unterresonanten Betrieb (ϕ >0) in den Figuren 3 und 4 und für den überresonanten Betrieb (ϕ <0) in den Figuren 5 und 6 dargestellt.

Im unterresonanten Betrieb liegt eine kapazitive Phase (ϕ >0) zwischen Umrichterausgangsspannung u und Laststrom i vor. Bei dieser kapazitiven Phasenverschiebung endet die Stromleitung mit einem Diodenstrom i_{D1} bzw. i_{D2}. Die Kommutierungsfolge Transistor - Gegendiode ist für diese kapazitive Phasenverschiebung charakteristisch, wobei die Gegendiode in der Literatur häufig auch als Inversdiode bezeichnet wird. In dieser Betriebsart müssen die Inversdioden der gegenüberliegenden Leistungs-MOSFETs 30 abkommutiert werden.

In einem Halbbrückenzweig am Spannungszwischenkreis 8 bedeutet das schnelle Schalten auf eine geflutete Diode oft zerstörerische Überspannungen an den Leistungshalbleitern, hervorgerufen durch den Diodenabriß der abkommutierten Diode und den parasitären Anschlußinduktivitäten des Leistungshalbleiters. Durch diesen Sachverhalt werden insbesondere Leistungs-MOSFETs in ihrem Betriebsbereich erheblich eingeschränkt, da die interne Diode auch bei FREDFETs halbleitertechnologisch ein schlechtes Abrißverhalten zeigt. Wie bereits eingangs erwähnt, hat selbst kurzzeitiges Überschreiten der höchstzulässigen Drain/Source-Spannung für 1 bis 2 ns den Ausfall des Bauelementes zur Folge.

Im überresonanten Betrieb liegt eine induktive Phase (ϕ <0) zwischen Umrichterausgangsspannung u und Laststrom i vor. Bei dieser induktiven Phasenverschiebung beginnt die Stromleitung mit einem Diodenstrom i_{D1} bzw. i_{D2}. Die Kommutierungsfolge Inversdiode - zugehöriger Transistor ist für diese induktive Phasenverschiebung charakteristisch. In dieser Betriebsart kommutiert der Strom von einer Inversdiode auf den zugehörigen Transistor, wodurch ein Diodenabriß mit seinen Folgen nicht mehr auftritt.

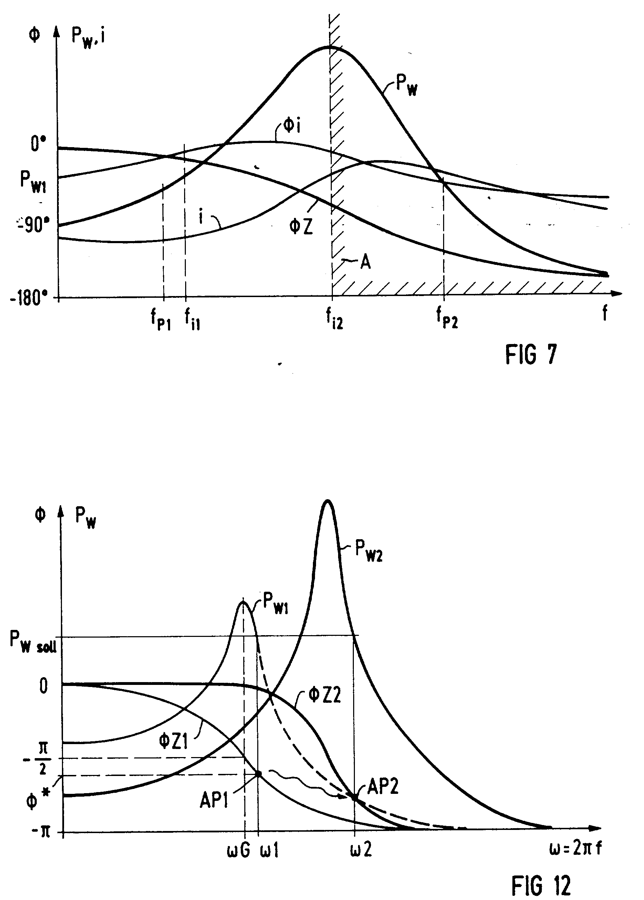

In der Figur 7 sind in einem Diagramm über der Frequenz f die Frequenzgänge des Laststromes i, der Wirkleistung P_{W}, der Phase φ1 des Laststromes i und der Phase φz einer Zustandsgröße Z eines Drei-Speicher-Systems. Bei Frequenzen oberhalb des Wirkleistungsmaximums verhält sich die Regelgröße (Wirkleistung) in Abhängigkeit von der Stellgröße (Frequenz) streng monoton. Damit bei der Regelung keine Umkehrung des Regelsinns eintritt, muß darauf geachtet werden, daß die Frequenzgänge monoton fallend oder aufsteigend sein müssen.

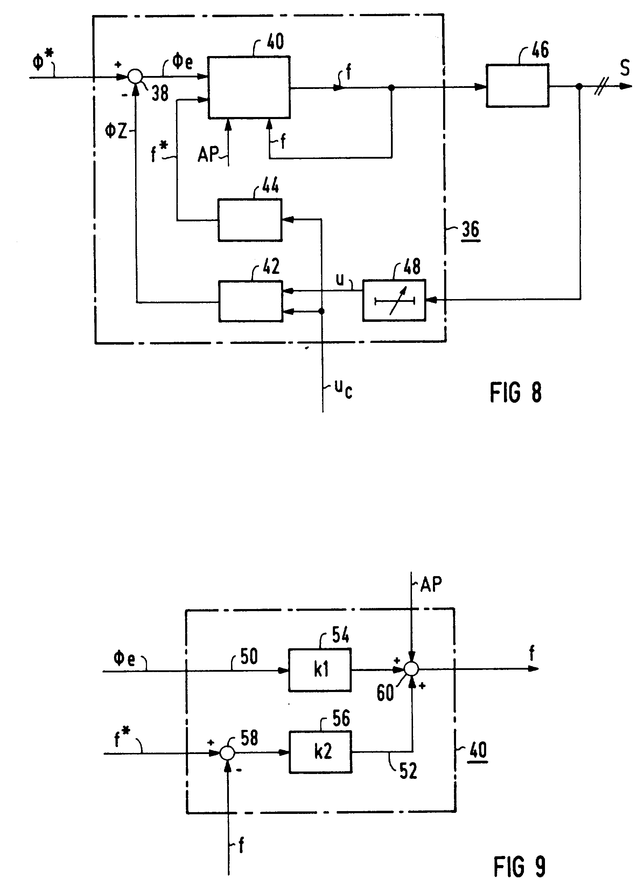

Der Frequenzgang der Phase φi des Laststromes i weist ein Maximum auf, so daß zu einem Phasenwinkelwert = 0° zwei Frequenzwerte fᵢ₁ und fᵢ₂ existieren (Mehrdeutigkeit). Ebenso fällt hier der Punkt der maximalen Leistung nicht mehr mit der Phasenlage φ = 0° (Phase zwischen Erregerspannung u und Laststrom i) zusammen. Die positive Stromphase φi kennzeichnet den kapazitiven Bereich der Transformationsschaltung 12. Stationärer Betrieb hat hier neben hohen Schaltverlusten das Auftreten von Überspannungen zur Folge. Ihre Ursache ist in dem Vorhandensein parasitärer Induktivitäten zu suchen. Zu große Überspannungen führen zum Überschreiten der Spitzensperrspannung des Mosfets 30 des Wechselrichters 10 und damit zur Zerstörung des Bauelementes. Der Betrieb im kapazitiven Bereich muß deshalb ausgeschlossen werden. Aus diesen Gründen wird der Arbeitsbereich A für Frequenzen oberhalb des Resonanzpunktes definiert. Für die Einhaltung eines solchen Arbeitsbereiches A ist die Vorrichtung 36, die in der Figur 8 näher dargestellt ist, verantwortlich.

Außerdem ist aus dem Frequenzgang zu ersehen, daß die Wirkleistung P_{W} in Abhängigkeit von der Frequenz f keine umkehrbare eindeutig Funktion darstellt. Einem Wirkleistungswert P_{W1} können in der Regel zwei Frequenzen f_{P1} und f_{P2} zugeordnet werden. Da unterresonantes Schalten vermieden werden soll, und die eindeutige Zuordnung eines Arbeitspunktes AP1 bzw. AP2 zum unter- oder überresonanten Bereich durch Erfassung des Leistungsistwertes nicht möglich ist, bietet sich dieser Leistungsistwert nicht als Regelgröße an. Parameterschwankungen am Induktor 14 beeinflussen in großem Maße die Lage des Leistungsmaximums auf der Frequenzskala. Eine einfache Einschränkung des Arbeitsbereiches A durch einen unteren Frequenzanschlag kann somit nicht stattfinden.

Gemäß diesem Diagramm ist die Funktion der Phase φZ einer Zustandsgröße Z in Abhängigkeit von der Frequenz f für die Transformation und für den spezifizierten Arbeitsbereich A streng monoton fallend. Die Frequenz, bei der das Leistungsmaximum eines Induktors 14 mit einer Induktorgüte von Q = 5 und größer eingespeist wird, ist höchstens so groß wie die Frequenz, bei der ein Phasenversatz von φZ = -90° auftritt. Der Wert φZ = -90° gilt jedoch nur im ungedämpften Fall. Für in der Praxis relevante Induktorgüten Q ≥ 5 kann das Leistungsmaximum mit hinreichender Genauigkeit bei einem Phasenwert φZ = -90° angesetzt werden. Bei sich ändernden Parametern des Schwingkreises bleibt das Leistungsmaximum mit dem Phasenwert φZ = -90° zusammen. Bei kleineren Guten Q des Schwingkreises verschiebt sich das Leistungsmaximum zu größeren Phasenwerten (-90°<φZ<0°). Mit dem Grenzwert φZ = -90° läßt sich somit der Arbeitsbereich A beim Maximum der Leistung P_{W} begrenzen. Bei der Verwendung eines Drei-Speicher-Systems als Lastkreis 12,14 stellt die Phase φZ als Funktion der Frequenz f die Funktion der Phasendifferenz zwischen einer Kondensatorspannung u_{C} und der Erregerspannung u des Wechselrichters 10 dar.

Mittels dieses Phasengangs φZ ist eine eindeutige Zuordnung der Regelgröße (Wirkleistung) und der Stellgröße (Frequenz) möglich, wobei auch eine Umkehrung des Regelsinns vermieden wird.

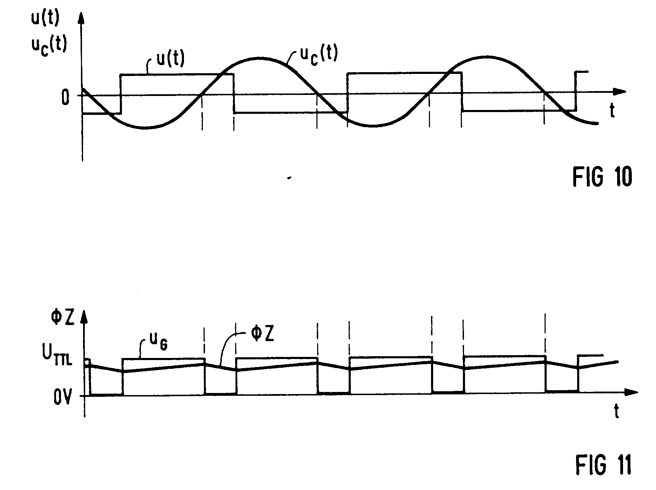

Die Figur 8 zeigt ein Blockschaltbild einer Vorrichtung 36 zur Durchführung des erfindungsgemäßen Verfahrens zur Arbeitspunktregelung eines Reihenschwingkreis-Wechselrichters 10. Diese Vorrichtung 36 besteht aus einem Vergleicher 38, dem ein Regler 40 nachgeschaltet ist, einem Phasendetektor 42 und einem Frequenzdetektor 44. Da dieser Regler 40 zur Arbeitspunktregelung vorgesehen ist, wird er auch als Arbeitspunktregler 40 bezeichnet. Am Plus-Eingang des Vergleichers 38 steht ein Phasenwinkel-Sollwert φ* an, der vorteilhafterweise von einer nicht näher dargestellten übergeordneten Leistungsregelung generiert wird. Der Minus-Eingang dieses Vergleichers 38 ist mit einem Ausgang des Phasendetektors 42 verknüpft. Ausgangsseitig ist der Vergleicher 38 mit einem Phaseneingang des Arbeitspunktreglers 40 verbunden, wobei in Figur 9 eine Ausführungsform des Arbeitspunktreglers 40 näher dargestellt ist. Ein erster Frequenzeingang des Arbeitspunktreglers 40 ist mit dem Ausgang des Frequenzdetektors 44 verbunden, an dessen Eingang eine Zustandsgröße Z des Lastkreises 12, 14 ansteht. Da bei einem Drei-Speicher-System als Lastkreis 12,14 der Phasengang φZ der Kondensatorspannung u_{C} monoton fallend ist, wird als Zustandsgröße Z die Kondensatorspannung u_{C} des Lastkreises 12, 14 verwendet. Diese Kondensatorspannung u_{C}, die im Diagramm nach Figur 10 über der Zeit t dargestellt ist, steht ebenfalls an einem Eingang des Phasendetektors 42 an. Am anderen Eingang dieses Phasendetektors 42 steht die Erregerspannung u des Wechselrichters 10 an. Diese Erregerspannung u ist im Diagramm der Figur 10 über der Zeit t dargestellt. Diese Erregerspannung u kann mittels eines Meßgliedes gemessen werden, oder aber wie in Figur 8 dargestellt, aus den Schaltsignalen S am Ausgang des Steuersatzes 46 und einem Verzögerungsglied 48 generiert werden. Der Ausgang des Arbeitspunktreglers 40 ist einerseits dem Steuersatz 46 und andererseits einem zweiten Frequenzeingang des Arbeitspunktreglers 40 zugeführt. Außerdem ist dem Arbeitspunktregler 40 ein Arbeitspunktvorsteuerwert AP zugeführt, da als Arbeitspunktregler 40 ein Zustandsregler vorgesehen ist. Diese vorteilhafte Ausführungsform benötigt zur Arbeitspunktregelung nur eine meßbare Zustandsgröße Z, die oftmals bereits zur Verfügung steht.

Bei der meßtechnischen Erfassung der Phasendifferenz sind Anordnungen üblich, deren jeweilige Eigendynamik nicht vernachlässigbar ist. Im vorliegenden Fall soll der Phasenversatz φZ zwischen der rechteckförmigen Erregerspannung u und der nahezu sinusförmigen Kondensatorspannung u_{C} bestimmt werden. Die Zeitdifferenz zwischen zwei Nulldurchgängen multipliziert mit der Kreisfrequenz ω der Signale u und u_{C} liefert die Phase. Möglichkeiten zur Realisierung von Phasendetektoren 42, die Betrachtung ihrer Eigendynamik und die Zweckmäßigkeit ihres Einsatzes für die vorliegende Anwendung sind im folgenden diskutiert:

Die digitale Aufnahme der Phasendifferenz φZ erfolgt bei einer Betriebsfrequenz von 400 kHz, einer Auflösung von 7 Bit und dem Anzeigebereich von 0° bis 180°, eine Zähldifferenz von über 100 MHz. Weiterhin ist die Zeit zwischen zwei Nulldurchgängen mit der Betriebsfrequenz f zu multiplizieren. Eine derartige Realisierung ist, wenn auch mit großem Aufwand verbunden, durch den Aufbau in ECL (Emitter-Coupled-Logic) möglich. Der digitale Entwurf des Reglers 42 ist allerdings bei diesem angegebenen Zahlenbeispiel wegen der auftretenden Rechenzeiten sehr aufwendig. Außerdem muß für die analoge Weiterverarbeitung der Signale ein D/A-Wandler vorgesehen werden. Deshalb wird hier analogen Methoden zur Istwerterfassung des Phasenversatzes φZ der Vorzug gegeben.

Analoge Phasendetektoren können als multiplizierende oder sequentielle Aufbauten realisiert werden. Beide Arten der Erfassung erzeugen ein oberwellenbehaftetes Signal, dessen Gleichanteil ein Maß für die Phasendifferenz φZ bildet.

Ein nachgeschalteter Tiefpaß unterdrückt den Wechselanteil. Der Aufbau eines derartigen Phasendetektors kann mit einem analogen Multiplizierer und einer entsprechenden Glättung des Signals erfolgen. Der Gleichanteil des Ausgangssignals stellt die über eine Cosinusfunktion abgebildete Phasendifferenz dar. Analoge Multiplizierer sind mit Eckfrequenzen von 100 MHz erhältlich. Bei der beispielsweise vorgegebenen Betriebsfrequenz von 400 kHz ist die Dynamik einer derartigen Istwerterfassung lediglich vom Zeitverhalten des Tiefpasses abhängig.

Sequentielle Phasendetektoren berücksichtigen nur die Lage der Nulldurchgänge beider Eingangssignale u und u_{C} auf der Zeitachse. Der spezielle Verlauf der Zeitfunktionen wirkt sich nicht auf das gewonnene Phasensignal aus. Der sequentielle Phasendetektor besteht aus einem schaltenden Element, welches auf die Nulldurchgänge der Eingangssignale reagiert. Die Beschaltung ist mit einem EXOR-Gatter, einem EXNOR-Gatter, einem AND-Gatter oder einem NAND-Gatter möglich. Zwei periodische Funktionen am Eingang eines Gatters liefern an seinem Ausgang ein Signal, dessen Gleichanteil der Phasendifferenz entspricht. Der Wechselanteil muß genau wie bei multiplizierenden Detektoren durch einen nachgeschalteten Tiefpaß unterdrückt werden. Ein verwendetes EXOR-Gatter hat einen Wertebereich von 0° bis 180°, in dem die Abbildung von der Phase auf den Gleichanteil des Gatterausgangs zum einen linear und zum anderen eindeutig ist. Für den vorgegebenen Lastkreis 12,14 (Serienschwingkreis mit drei Energiespeichern) ist damit der gesamte auftretende Phasenbereich abgedeckt.

Das Ausgangssignal u_{G} (Fig. 11) des Gatters wird über einen Tiefpaßfilter geglättet. Die Grundwelle des Wechselanteils am Ausgang des EXOR-Gatters schwingt mit der doppelten Frequenz der Eingangssignale. Die Amplitude des Wechselanteils ist so groß wie der gesamte Ausgangspegel. Als Glättung wird hier ein einfacher RC-Filter verwendet. Das Ausgangssignal des Filters, der Phasenwinkel-Istwert φZ, ist in der Figur 11 in einem Diagramm über der Zeit t dargestellt.

Als Frequenzdetektor 44 ist beispielsweise ein Monoflop mit nachgeschaltetem Glättungsglied vorgesehen, der die Kondensatorspannung u_{C} in eine Frequenz f wandelt, die für den Arbeitspunktregler 40 als Frequenz-Sollwert dient. Außerdem kann anstelle eines Monoflops ein Schmitt-Trigger verwendet werden.

Die Figur 9 zeigt ein Blockschaltbild einer Ausführungsform des Arbeitpunktreglers 40, der als Zustandsregler ausgeführt ist. Dieser Zustandsregler enthält im Phasenkanal 50 und im Frequenzkanal 52 jeweils ein Proportionalglied 54 und 56. Im Frequenzkanal 52 ist außerdem noch ein Vergleicher 58 angeordnet, der den Frequenzwert f* der Zustandgröße u_{C} des Lastkreises 12, 14 mit der Stellgröße f des Wechselrichters 10 vergleicht. Die Ausgangssignale der Proportionalglieder 54 und 56 werden mittels eines Addiergliedes 60 miteinander zur Stellgröße f des Wechselrichters 10 verknüpft. Diesem Addierglied 60 wird außerdem ein Arbeitspunktvorsteuerwert AP zugeführt werden, da es sich hier um einen Zustandsregler handelt. Dieser Arbeitspunktvorsteuerwert AP sorgt dafür, daß der Phasenkanal so auch beim Anfahren der Anlage sinnvoll arbeitet. Der Frequenzkanal 52 dient lediglich zum Anfahren und Einrasten des Zustandsreglers 40 auf den Phasenregelkreis, mit dem der Phasenwinkel φZ der Zustandsgröße u_{C} auf einen von einer überlagerten Leistungsregelung bereitgestellten Phasenwinkel-Sollwert φ* geregelt wird.

Der Arbeitspunktregler 40 hat die Aufgabe, den überresonanten Betrieb des Reihenschwingkreis-Wechselrichters 6 bis 14 sicherzustellen. Betriebspunkte mit einer Frequenz unterhalb der Phasenverschiebung φZ = -90° dürfen demnach stationär nicht auftreten (Figur 12). Mittels der Arbeitspunktvorsteuerung, die beispielsweise auf einem Betriebspunkt AP1 eingestellt ist, ist das Einschwingen in den gewünschten Sollwert φ* gewährleistet. Beim Einführen des Heizgutes oder beim Überschreiten der Curietemperatur sinkt der an den Induktorklemmen wirkende Imaginärteil der Impedanz. Die Folge ist eine Erhöhung der Resonanzfrequenz. In der Figur 12 ist dies durch eine weitere Leistungskurve P_{W2} und einen zugehörigen Phasengang φZ2 dargestellt, wobei die Parameteränderung für gleiche Wirkleistung P_{Wsoll} betrachtet ist. Im vorgegebenen Arbeitspunkt AP1 ist der Phasenwinkel-Istwert φZ der Zustandsgröße u_{C} gleich dem Phasenwinkel-Sollwert φ* entsprechend einem Leistungs-Sollwert P_{Wsoll}. Ändert sich das elektrische Verhalten des Induktors 14, so treten Abweichungen von dem eingestellten Betriebspunkt AP1 auf. Die Figur 12 verdeutlicht den Übergang bei Parameterschwankungen zwischen zwei Phasengängen φZ1 und φZ2 der Transformationsschaltung 12 für den geregelten Kreis. Veränderte Parameter haben für die eingestellte Betriebsfrequenz ω1 eine Phasenlage φ* = φAP1 zur Folge, welche mit dem eingestellten Phasenwinkel-Sollwert φ* entspricht. Der Soll-Istwert-Vergleich zeigt eine Abweichung, welche durch den Regler 40 solange verringert wird, bis der neue Arbeitspunkt AP2 erreicht ist. Die Frequenzverstimmung wird durch eine Abweichung φe der Phasenwinkel φ* und φZ und deren Verstärkung über den Phasenkanal 50 des Zustandsreglers 40 hervorgerufen.

Bei der Einstellung des Arbeitspunktes muß darauf geachtet werden, daß überresonanter Betrieb auch bei stärksten Parameterschwankungen garantiert ist. Die größtmögliche Verschiebung des Resonanzpunktes in Richtung höherer Frequenzen entsteht für kleinstmöglichen Blindwiderstand des Induktors 14 mit Heizgut. Dieser Fall tritt für die kleinstmögliche Induktivität des Heizgutes ein. Der Phasenwinkel-Sollwert φ* sowie die zugehörige Betriebsfrequenz ω1 müssen derart angepaßt werden, daß auch bei Entfernen des Erwärmungsgutes überresonantes Schalten eintritt. Die Verschiebung des Resonanzpunktes zu kleineren Frequenzen ist unkritisch.

Bei Störungen, wie beispielsweise Induktorkurzschlüssen, treten plötzlich große Veränderungen der Resonanzfrequenz auf. Die erfindungsgemäße Regelung kann auf derartige sprungförmige Änderungen im Lastkreis 12,14 nicht reagieren, da der Phasendetektor 42 und der Frequenzdetektor 44 jeweils ein Glättungsglied aufweisen. Untergeordnete Schutzfunktionen haben die Aufgabe, im Kurzschluß auftretende dynamische unterresonante Schaltzyklen zu verhindern, damit die Schaltelemente 30 des Wechselrichters 10 nicht zerstört werden. Nach Beseitigung des Fehlers wird mittels der erfindungsgemäßen Regelung der Arbeitspunkt AP1 bzw. AP2 schnell wieder angefahren. Die Realisierung des Reglers mit Proportionalgliedern 54 und 56 kommt dieser Forderung entgegen, da abgesehen von der Istwerterfassung keine speichernden Elemente auftreten.

Mit dem erfindungsgemäßen Verfahren und einer Vorrichtung zur Durchführung dieses Verfahrens können Verschiebungen des Resonanzpunktes fehlerfrei erkannt werden. Diese Tatsache eröffnet die Möglichkeit, den Betriebsbereich auch bei starken Laständerungen einzuhalten. Mittels dieses Verfahrens werden Überschwinger beim Einlaufen in einen Betriebspunkt, der im nahen Bereich des Resonanzpunktes des Schwingkreises liegt, verhindert, so daß unterresonantes Schalten und damit das Verlassen des definierten Arbeitsbereiches nicht stattfindet. Außerdem benötigt man bei der Verwendung der erfindungsgemäßen Regelung keinen steuerbaren Gleichrichter 6 mehr. Anstelle dieses gesteuerten Gleichrichters 6 kann nun ein ungesteuerter Gleichrichter verwendet werden, wodurch sich die Regeleinrichtung 20 wesentlich verringert. Mittels der erfindungsgemäßen Regelung kann man nun ohne großen Aufwand über eine Frequenzsteuerung die Leistung des Reihenschwingkreis-Wechselrichters auf einen vorbestimmten Sollwert regeln.

## Patentansprüche

1. Verfahren zur Arbeitspunktregelung (AP1, AP2) eines Reihenschwingkreis-Wechselrichters (6 bis 14), wobei die Frequenz (f) des Wechselrichters (10) als Stellgröße in Abhängigkeit einer bestimmten Phasenwinkel-Regeldifferenz (Φe) derart gesteuert wird, daß ein ermittelter Phasenwinkel-Istwert (ΦZ) als Phasenversatz zwischen der mittels des Wechselrichters (10) generierten Erregerspannung (u) und einer meßbaren Zustandsgröße (Z,i,u_{c}) des Lastkreises (12,14), deren Phasengang monoton fallend verläuft, einem vorgebbaren Phasenwinkel-Sollwert (Φ*)entspricht.

2. Verfahren nach Anspruch 1, wobei der Phasenwinkel-Sollwert (Φ*) mittels einer übergeordneten Leistungsregelung des Reihenschwingkreis-Wechselrichters (6 bis 14) erzeugt wird.

3. Verfahren nach Anspruch 1 mit einem Zwei-Speicher-System als Lastkreis (12,14), wobei als meßbare Zustandsgröße (i,u_{c}) des Lastkreises (12,14) der Laststrom (i) benutzt wird.

4. Verfahren nach Anspruch 1 mit einem Drei-Speicher-System als Lastkreis (12,14), wobei als meßbare Zustandsgröße (i,u_{c}) des Lastkreises (12,14) die Kondensatorspannung (u,_{c}) benutzt wird.

5. Vorrichtung (36) zur Durchführung des Verfahrens zur Arbeitspunktregelung (AP1, AP2) eines Reihenschwingkreis-Wechselrichters (6 bis 14) nach Anspruch 1, bestehend aus einem Vergleicher (38) mit nachgeschaltetem Arbeitspunkt-regler (40) als Phasenregler, einem Phasendetektor (42) und einem Frequenzdetektor (44), wobei der Phasendetektor (42) ausgangsseitig mit dem Minus-Eingang des Vergleichers (38) und der Frequenzdetektor (44) ausgangsseitig mit einem ersten Frequenzeingang des Arbeitspunktreglers (40) verknüpft sind, wobei an den Eingängen des Phasendetektors (42) die Erregerspannung (u) des Wechselrichters (10) und eine meßbare Zustandsgröße (Z,i,u_{c}) des Lastkreises (12,14), deren Phasengang monoton fallend verläuft, anstehen, wobei diese meßbare Zustandsgröße (Z,i,u_{C}) außerdem einem Eingang des Frequenzdetektors (44) zugeführt wird, und wobei ein zweiter Frequenzeingang des Arbeitspunktreglers (40) mit seinem Ausgang verknüpft ist.

6. Vorrichtung (36) nach Anspruch 5, wobei der Arbeitspunktregler (40) als Zustandsregler mit jeweils einem Proportionalglied (54,56) im Phasenkanal (50) und im Frequenzkanal (52) ausgeführt ist und wobei der Zustandsregler mit einer Arbeitspunkt-Vorsteuerung versehen ist.

7. Vorrichtung (36) nach Anspruch 5, wobei der Phasendetektor (42) aus einem EXOR-Gater mit nachgeschaltetem Glättungsglied besteht.

8. Vorrichtung (36) nach Anspruch 5, wobei als Frequenzdetektor (44) ein Monoflop mit nachgeschaltetem Glättungsglied verwendet wird.

9. Vorrichtung (36) nach Anspruch 5, wobei als Frequenzdetektor (44) ein Schmitt-Trigger mit nachgeschaltetem Glättungsglied verwendet wird.

## Claims

1. Method for controlling the working points (AP1, AP2) of a series-resonant-circuit inverter (6 to 14), whereby the frequency (f) of the inverter (10) is controlled as manipulated variable in dependence upon a certain phase angle system deviation (Φe) in such a way that a determined actual phase-angle value (ΦZ) as phase displacement between the excitation voltage (u) generated by means of the inverter (10) and a measurable state variable (Z,i,u_{c}) of the load circuit (12, 14), the phase-frequency characteristic of which is monotonically decreasing, corresponds to a specifiable desired phase-angle value (Φ*).

2. Method according to claim 1, whereby the desired phase-angle value (Φ*) is generated by means of a master power control of the series-resonant-circuit inverter (6 to 14).

3. Method according to claim 1, having a two-storage system as load circuit (12,14), whereby the load current (i) is used as measurable state variable (i,u_{c}) of the load circuit (12,14).

4. Method according to claim 1, having a three-storage system as load circuit (12,14), whereby the capacitor voltage (u,_{c}) is used as measurable state variable (i,u_{c}) of the load circuit (12,14).

5. Device (36) for carrying out the method for controlling the working points (AP1, AP2) of a series-resonant-circuit inverter (6 to 14) according to claim 1, consisting of a comparator (38) with downstream working-point controller (40) as phase controller, a phase detector (42) and a frequency detector (44), whereby the phase detector (42) is connected on the output side to the minus input of the comparator (38) and the frequency detector (44) is connected on the output side to a first frequency input of the working-point controller (40), whereby there are present at the inputs of the phase detector (42) the excitation voltage (u) of the inverter (10) and a measurable state variable (Z,i,u_{c}) of the load circuit (12, 14), the phase-frequency characteristic of which is monotonically decreasing, whereby this measurable state variable (Z,i,u_{c}), moreover, is supplied to an input of the frequency detector (44), and whereby a second frequency input of the working-point controller (40) is connected to its output.

6. Device (36) according to claim 5, whereby the working-point controller (40) is designed as state controller with a respective proportional element (54, 56) in the phase channel (50) and in the frequency channel (52) and whereby the state controller is provided with a working-point precontrol.

7. Device (36) according to claim 5, whereby the phase detector (42) consists of an EX-OR gate with downstream smoothing element.

8. Device (36) according to claim 5, whereby a flip-flop with downstream smoothing element is used as frequency detector (44).

9. Device (36) according to claim 5, whereby a Schmitt trigger with downstream smoothing element is used as frequency detector (44).

## Revendications

1. Procédé de régulation (AP1, AP2) du point de fonctionnement d'un onduleur (6 à 14) ayant un circuit résonnant série, dans lequel on commande la fréquence (f) de l'onduleur (10) en tant que grandeur réglante en fonction d'une différence (Φe) déterminée réglée d'angle de phase, de telle sorte qu'une valeur (ΦZ) réelle déterminée de l'angle de phase corresponde, en tant que déphasage entre la tension (u) d'excitation générée au moyen de l'onduleur (10) et une grandeur (Z, i, u_{c}) mesurable d'état du circuit (12, 14) de charge, dont la courbe de phase en fonction de la fréquence est monotone décroissante, en une valeur (Φ*) de consigne de l'angle de phase, qui peut être prescrite.

2. Procédé suivant la revendication 1, dans laquelle on produit la valeur (Φ*) de consigne de l'angle de phase au moyen d'un régulation de puissance, d'ordre supérieur, de l'onduleur (6 à 14) à circuit résonnant série.

3. Procédé suivant la revendication 1, comportant un système à deux éléments d'accumulation comme circuit de charge (12, 14), dans lequel on utilise comme grandeur (i, u_{c}) mesurable d'état du circuit (12, 14) de charge le courant (i) de la charge.

4. Procédé suivant la revendication 1, comportant un système à trois éléments d'accumulation comme circuit (12, 14) de charge, dans lequel on utilise comme grandeur (i, u_{c}) mesurable d'état du circuit (12, 14) de charge la tension (u_{c}) d'un condensateur.

5. Dispositif (36) destiné à mettre en oeuvre le procédé de régulation (AP1, AP2) du point de fonctionnement d'un onduleur (6 à 14) à circuit résonnant en série suivant la revendication 1, constitué d'un comparateur (38), en aval duquel est branché comme régulateur de phase un régulateur (40) de point de fonctionnement, d'un détecteur (42) de phases et d'un détecteur (44) de fréquence, le détecteur (42) de phase étant relié côté sortie à l'entrée moins du comparateur (38) et le détecteur (44) de phase étant relié côté sortie à une première entrée de fréquence du régulateur (40) de point de fonctionnement, la tension (u) d'excitation de l'onduleur (10) et une grandeur mesurable (Z, i, u_{c}) d'état du circuit (12, 14) de charge, dont la courbe de phase en fonction de la fréquence est monotone décroissante, étant appliquée aux entrées du détecteur (42) de phase, cette grandeur (Z, i, u_{c}) mesurable d'état étant envoyée en outre à une entrée du détecteur (44) de fréquence et une seconde entrée de fréquence du régulateur (40) de point de fonctionnement étant reliée à sa sortie.

6. Dispositif (36) suivant la revendication 5, dans lequel le régulateur (40) de point de fonctionnement est sous la forme d'un régulateur d'état ayant un élément (54, 56) de proportionnalité dans le canal (50) de phase et dans le canal (52) de fréquence et dans lequel le régulateur d'état est muni d'une commande pilote de point de fonctionnement.

7. Dispositif (36) suivant la revendication 5, dans lequel le détecteur (42) de phase est constitué d'une porte OU-exclusif en aval de laquelle est branché un élément de lissage.

8. Dispositif (36) suivant la revendication 5, dans lequel une bascule monostable, en aval de laquelle est branché un élément de lissage, est utilisée comme détecteur (44) de fréquence.

9. Dispositif (36) suivant la revendication 5, dans lequel un Trigger de Schmitt, en aval duquel est branché un élément de lissage, est utilisé comme détecteur (44) de fréquence.
